## Europäisches Patentamt
## European Patent Office
## Office européen des brevets

(11) Veröffentlichungsnummer: **0 037 473**
**A1**

# (12) EUROPÄISCHE PATENTANMELDUNG

(21) Anmeldenummer: **81101858.9**

(22) Anmeldetag: **13.03.81**

(51) Int. Cl.³: **F 16 M 7/00**

(30) Priorität: **03.04.80 DE 3012986**

(43) Veröffentlichungstag der Anmeldung:
**14.10.81 Patentblatt 81/41**

(84) Benannte Vertragsstaaten:
**AT CH DE FR GB IT LI NL**

(71) Anmelder: **M.A.N. - ROLAND Druckmaschinen
Aktiengesellschaft
Christian-Pless-Strasse 6-30
D-6050 Offenbach/Main(DE)**

(72) Erfinder: **Bezler, Wilhelm
Prof.-Kurzstrasse 14
D-8900 Augsburg(DE)**

(72) Erfinder: **Öschay, Johann
Römerstrasse 6
D-8901 Wehringen(DE)**

(54) **Hilfseinrichtung für die Aufstellung von Schwerlasten an einer Stellfläche.**

(57) Als Hilfseinrichtung für die Aufstellung von Schwerlasten wie Großmaschinen, beispielsweise Druckwerke, Brennkraftmaschinen oder dergleichen an einer Stellfläche sind Lagejustageschuhe (1) mit jeweils einer an der Stellfläche zur Anlage kommenden Grundplatte (6) und einer an der aufzustellenden Last zur Anlage kommenden Auflagefläche (45) vorgesehen. Letztere ist an einem Teil eines Hebe- und Verschiebemechanismus angeordnet, der aus einer an der Oberseite (16) der Grundplatte (6) angeordneten Querverschiebeplatte (9) sowie einer dergegenüber unter Einwirkung einer zwischengeschalteten, querverschieblichen Keilplatte (10) höhenverstellbaren Trägerplatte (11) besteht und für eine Querverschiebung unter aufgesetzter Last zur Ausbildung eines Ölpolsters zwischen Grundplatte (6) und Querverschiebeplatte (9) über schuhinterne Druckölzuleitungen an eine Druckölversorgung (2) anschließbar ist Diese Hilfseinrichtung ermöglicht eine rasche und unkompliziert durchführbare Feinjustage von Schwerlasten am Aufstellort.

Fig.2

PB 3045/1457          - 1 -

## Hilfseinrichtung für die Aufstellung von Schwerlasten an einer Stellfläche

Die Erfindung betrifft eine Hilfseinrichtung für die Aufstellung von Schwerlasten wie Großmaschinen, beispielsweise Druckwerke, Brennkraftmaschinen oder dergleichen an einer Stellfläche.

Derartige Schwerlasten werden am Aufstellort üblicherweise unter Zuhilfenahme eines Krans aufgestellt. Vielfach ist dabei eine millimetergenaue Ausrichtung der am Kran hängenden Last erforderlich, insbesondere dann, wenn beispielsweise mehrere Großmaschinen zu einer Maschinenanlage zusammengesetzt werden müssen oder andere Aggregate bereits ortsfest vorhanden sind, zu denen die kranseitig abzusenkende Last eine bestimmte Lage einnehmen muß. Zum einen stehen hochpräzise Krananlagen jedoch nicht überall zur Verfügung und zum anderen sind die Fundamente für die abzustellenden Lasten üblicherweise nicht mit der erforderlichen Genauigkeit herstellbar.

Ausgehend von dieser Problematik ist es daher Aufgabe der Erfindung, eine Hilfseinrichtung für die Aufstellung von Schwerlasten zu schaffen, durch die Ungenauigkeiten an der Stellfläche sowie Aufstellungsungenauigkeiten bezüglich der Lage der abgesetzten Schwerlast ausgleichbar sind.

Diese Aufgabe ist durch eine Hilfseinrichtung entsprechend den Merkmalen des Anspruches 1 gelöst. Vorteilhafte Ausgestaltungen und Weiterbildungen derselben sind in den Unteransprüchen gekennzeichnet. Bei Verwendung der erfindungsgemäßen Hilfseinrichtung wird eine Schwerlast zunächst auf mehrere am Aufstellort bereits lagerichtig plazierte Lagejustageschuhe abgesenkt, wobei nach vollständiger Auflage der Last auf jedem der untergelegten Lagejustageschuhe ein Gewicht von beispielsweise mehreren Tonnen ruht. Die Vorteile der Erfindung sind insbesondere in der einfachen Handhabung der Hilfseinrichtung zu suchen, wobei jeder Lagejustageschuh eine Quer-, Längs- und Höhenverstellung der aufliegenden Last zur Lagefeinjustage derselben ermöglicht. Zur Höhenverstellung ist lediglich eine Verschiebespindel am Lagejustageschuh zu verdrehen, wodurch die Keilplatte desselben querverschoben und die oben aufliegende Trägerplatte angehoben oder abgesenkt wird. Für eine Quer- oder Längsverschiebung der aufliegenden Last werden die Lagejustageschuhe an die Drucköhlversorgung angeschlossen, dann diesen Drucköl zugeführt, so daß sich zwischen Grundplatte und Querverschiebeplatte ein die Querverschiebung ermöglichendes Ölpolster ausbildet. Die Verschiebung erfolgt in einfacher Weise durch Verdrehung von Stellschrauben, die außen an der Querverschiebeplatte angreifen. Für diese Justagetätigkeit sind weder besonders große Kräfte noch komplizierte Werkzeuge aufzuwenden, so daß insgesamt gesehen eine praxisgerechte Anwendbarkeit gegeben ist.

Nachstehend ist ein Ausführungsbeispiel der Erfindung anhand der Zeichnung näher beschrieben. Es zeigen:

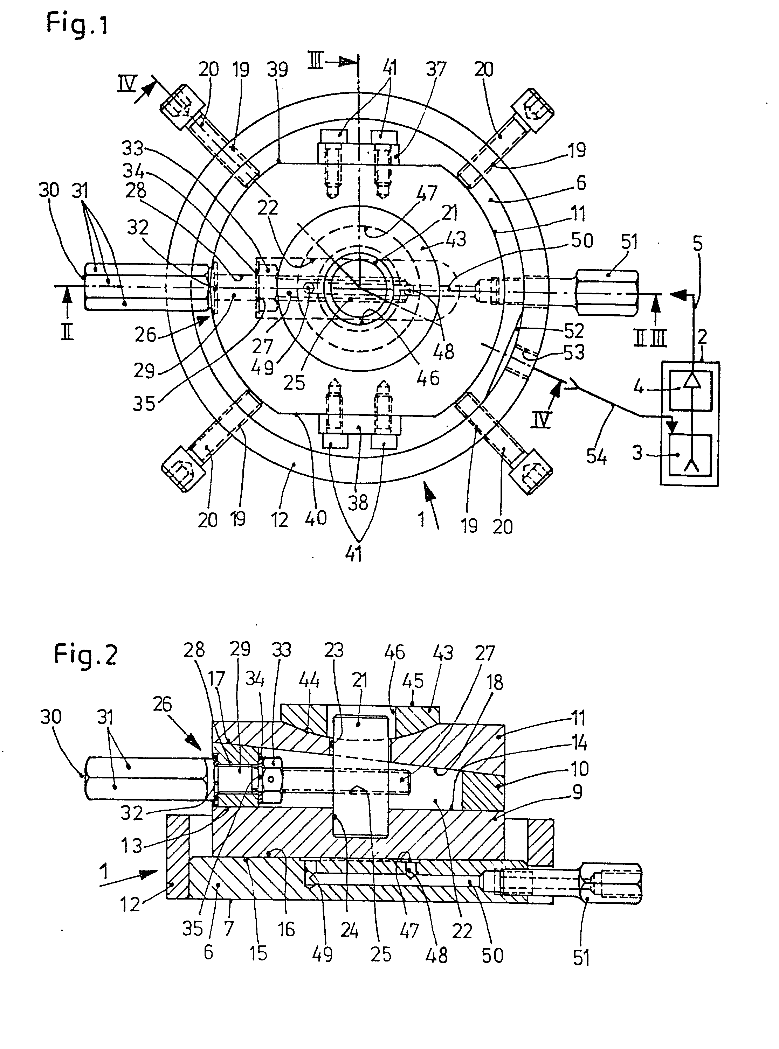

Fig. 1      eine Draufsicht auf einen Lagejustageschuh nach der Erfindung,

Fig. 2      einen Schnitt durch den Lagejustageschuh
entlang der in Fig. 1 eingezeichneten
Schnittlinie II-II,

Fig. 3      einen Schnitt durch den Lagejustageschuh
entlang einer in Fig. 1 eingezeichneten
Schnittlinie III-III,

Fig. 4      einen Schnitt durch den Lagejustageschuh
entlang einer in Fig. 1 eingezeichneten
Schnittlinie IV-IV,

Fig. 5      eine Ansicht einer aufgestellten Schwerlast mit untergelegten Lagejustageschuhen.

Die erfindungsgemäße Hilfseinrichtung für die Aufstellung von Schwerlasten besteht aus einem Lagejustageschuh 1 und einer daran anschließbaren Druckölversorgung 2. Letztere besteht im vorliegenden Falle aus
einem Druckölreservoir 3, einer Hochdruckförderpumpe 4 und zu den Lagejustageschuhen führende Förderleitungen 5.

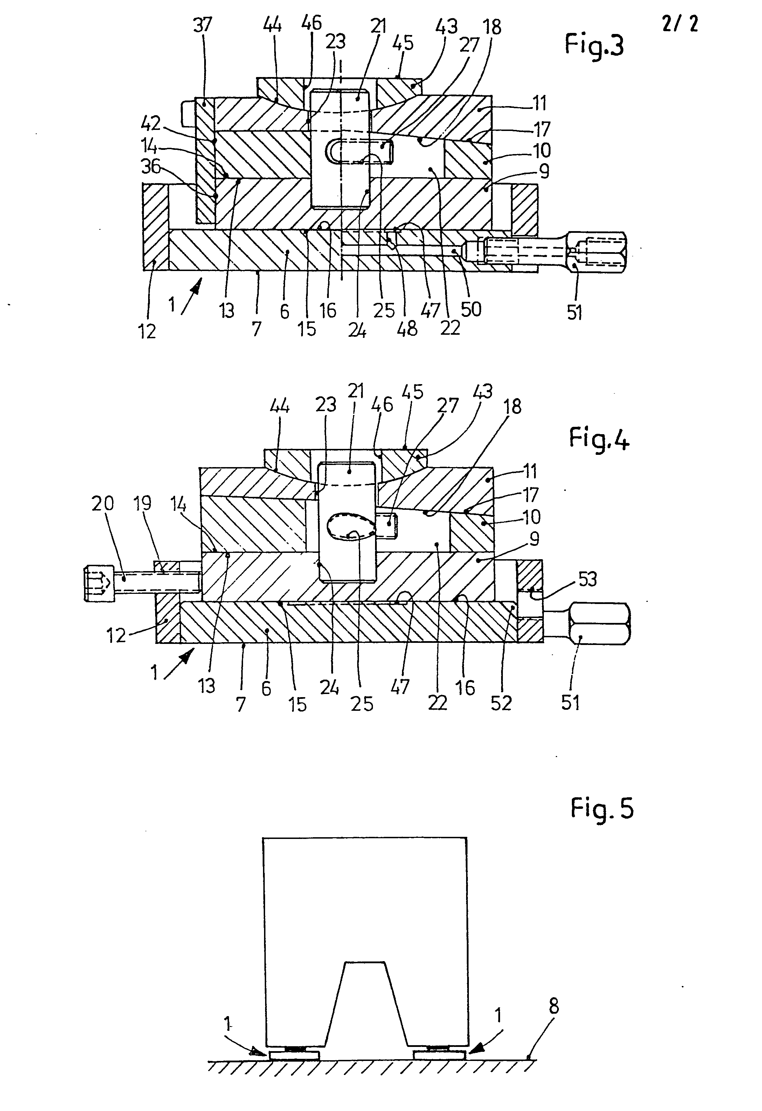

Der Lagejustageschuh 1 besteht aus einer Grundplatte 6,
die mit ihrer Unterseite 7 - wie in Fig. 5 gezeigt -
an einer Stellfläche 8 zur Anlage kommt, und einem
Hebe- und Verschiebemechanismus, der wiederum aus einer an der Oberseite der Grundplatte 6 angeordneten
Querverschiebeplatte 9 sowie einer dergegenüber unter
Einwirkung einer zwischengeschalteten, querverschieblichen Keilplatte 10 höhenverstellbaren Trägerplatte
11 besteht. Die Trägerplatte 11, die Keilplatte 10,
die Querverschiebeplatte 9 und die Grundplatte 6 sind im gezeigten Ausführungsbeispiel jeweils kreisförmig
ausgebildet; die Grundplatte 6 ist jedoch gegenüber
den anderen durchmessergleichen Platten 9, 10 und 11
durchmessergrößer und außen von einem axial vorspingenden Begrenzungsring 12 umgeben, der bis knapp an
die Unterseite 13 der Keilplatte 10 heranreichend
den Verschiebebereich der Querschiebeplatte 9 begrenzt. Die Oberseite 14 und Unterseite 15 der Querverschiebeplatte 9 sind planparallel zueinander geschliffen. Die Oberseite 16 der Grundplatte 6 sowie
die Unterseite 13 der Keilplatte 10 sind ebenfalls
geschliffen. An ihrer Oberseite besitzt die Keilplatte 10 eine schräge Verschiebefläche 17, die ebenso
wie eine an ihr anliegende, an der Unterseite der
Trägerplatte 11 angeordnete schräge Hebefläche 18
geschliffen ist.

Am Begrenzungsring 12 sind gleichmäßig am Umfang verteilt vier radiale Gewindebohrungen 19 mit eingesetzten Stellschrauben 20 vorgesehen, die seitlich an
der Querverschiebeplatte angreifend - siehe insbesondere Fig. 4 - zur Querverschiebung des Hebe- und
Verschiebemechanismus dienen.

An der Oberseite der Querverschiebeplatte 9 ist in
zentraler Lage eine axial vorspringende zylindrische
Führungssäule 21 angeordnet, die eine quer zu ihr
verlaufende Längsnut in der Keilplatte 10 sowie eine
durchmesserseitig geringfügig größere Führungsbohrung 23 in der Trägerplatte 11 durchdringt, wodurch
deren fluchtende Lage zur Querverschiebeplatte 9
sichergestellt ist. Die Führungssäule 21 ist im gezeigten Ausführungsbeispiel in einer Sacklochbohrung
24 in der Querverschiebeplatte 9 mit Festsitz eingesetzt. Die Führungssäule 21 besitzt im Bereich der
Längsnut 22 in der Keilplatte 10 eine quer durchgehende Gewindebohrung 25, in die eine in der Keilplatte 10 drehbar gelagerte, jedoch gegen axiale Verschiebung gesicherte Verschiebespindel 26 mit ihrem
Stellgewindebolzen 27 eingreift; an letzteren schließt
sich als weiteres Teil der Verschiebespindel 26 ein
eine Führungsbohrung 28 in der Keilplatte 10 durchdringender Führungsschaft 29 sowie an diesen außerhalb der Keilplatte 10 ein durchmessergrößerer Verstellschaft 30 mit Anformungen 31 für das Ansetzen
von Werkzeugen an. Der Stellgewindebolzen 27 durchdringt dabei mittig den durch die Längsnut 22 gebildeten Freiraum in der Keilplatte 10. Zur Sicherung
gegen axiale Verschiebung ist die Verschiebespindel
26 beiderseits ihres Führungsschaftes 29 gekontert,
wobei hierzu eine sich außen an der Keilplatte 10
abstützende Beilagscheibe 32 sowie eine verstiftete
Kontermutter 33 dienen, welch letztere sich über eine
zwischengeschaltete Beilagscheibe 34 an einer ebenen
Konterfläche 35 als einem Teil der Längsnutwandung
an der Keilplatte 10 abstützt.

Zur Verhinderung einer gegenseitigen Verdrehung der
Querverschiebeplatte 9, der Keilplatte 10 und der
Trägerplatte 11 sind an der Querverschiebeplatte 9
symmetrisch zu deren Achse zwei einander diametral
gegenüberliegende parallele Führungsflächen 36
- siehe Fig. 3 - angeformt, die mit zwei parallelen
Führungsplatten 37 und 38 zusammenwirken, welche an
der Trägerplatte 11 symmetrisch zu deren Achse, die
dazwischenliegende schräge Hebefläche 18 derselben
begrenzend und diametral einander gegenüberliegend
an parallelen Stützflächen 39 bzw. 40 mittels Schrauben 41 befestigt sind; die beiden Führungsplatten 37
und 38 wirken mit ihren Innenflächen außerdem mit
zwei parallelen Führungsflächen 42 zusammen, die an
der Keilplatte 10 parallel zur Längsnut 22, die dazwischenliegende schräge Verschiebefläche 17 begrenzend angeordnet sind.

Zum Ausgleich von Unebenheiten an der Stellfläche 8 oder der Anlagefläche der aufzusetzenden Last ist an der Oberseite der Trägerplatte 11 eine Kalotte 43 aufgesetzt, die mit ihrer kugeligen, unten angeordneten Lagerfläche in einer entsprechend angepaßten konkaven Lagerschale 44 in der Trägerplatte 11 gelagert ist und oben eine ebene Stirnfläche 45 aufweist, die als Auflagefläche für die abzustellende Last dient. Darüber hinaus besitzt die Kalotte 43 eine zentrale Durchgangsbohrung 46, die durchmessergrößer als die teilweise in sie hineinragende Führungssäule 21 ist.

Für eine Querverschiebung der aufgesetzten Last nach allen Richtungen ist der Lagejustageschuh 1 zur Ausbildung eines Ölpolsters zwischen Grundplatte 6 und Querverschiebeplatte 9 über schuhinterne Drucköldzuleitungen an eine der externen Förderleitungen 5 der Druckölversorgung 2 anschließbar. Die schuhinternen Druckölzuleitungen sind im gezeigten Ausführungsbeispiel in der Grundplatte 6 vorgesehen. Als schuhinterne Druckölzuleitungen in der Grundplatte 6 sind dabei eine an deren Oberseite gelegene Ringnut 47, zwei in diese einmündende achsparallele Stichbohrungen 48 bzw. 49 sowie ein zu diesen hinführender Querkanal 50 vorgesehen, welch letzterer seitlich aus der Grundplatte 6 herausführt und über ein an letzterer befestigtes Anschlußorgan 51 zur Druckölzuführung an eine Förderleitung 5 der Druckölversorgung 2 anschließbar ist. In vorteilhafter Weise sind dabei das Anschlußorgan 51 und die anzuschließende Förderleitung über eine nicht dargestellte Schnellkupplung miteinander verbindbar. Darüber hinaus ist an der

Grundplatte 6 eine Lecköltfangrinne 52 sowie eine hiervon abzweigende Rücklaufbohrung 53 mit Innengewinde zum Anschluß einer mit dem Drucköltreservoir 3 der Drucköltversorgung 2 verbundenen Lecköltrücklaufleitung 54 vorgesehen.

Bei der Aufstellung einer Schwerlast, bei der es sich, wie in Fig. 5 schematisch gezeigt, um eine Rotationsdruckmaschine handeln kann, werden zunächst Lagejustageschuhe in der erforderlichen Anzahl an der Stellfläche 8 aufgesetzt und positioniert. Anschließend werden die Lagejustageschuhe beispielsweise mittels Meßlatten und Feinwaagen vornivelliert und auf eine einheitliche Höhe eingestellt. Auf diese derart vorbereiteten Lagejustageschuhe wird die Last, im gezeigten Ausführungsbeispiel die Rotationsdruckmaschine, mittels eines Kranes abgesetzt. Im nächsten Schritt wird das Maschinenaggregat höhenjustiert, wobei je nach Erfordernis am jeweiligen Lagejustageschuh die Verschiebespindel 26 verdreht, dadurch die Keilplatte 10 querverschoben und die aufliegende Trägerplatte 11 höhergestellt oder abgesenkt wird. Nach dieser in Z-Richtung eines dreiachsigen Raumkoordinatensystems erfolgten Höhenjustage der Last werden für eine Feinjustage derselben in X- und Y-Richtung die Lagejustageschuhe an die Förderleitungen 5 der Drucköltversorgung 2 angeschlossen und den Lagejustageschuhen 1 mittels der Hochdruckförderpumpe 3 Drucköl zur Ausbildung eines Ölpolsters zwischen der jeweiligen Grundplatte 6 und der jeweiligen Querverschiebeplatte 9 - je nach Gewicht der Last mit ca. 100 bis 200 bar - zugeführt. Diese sich innerhalb der Lagejustageschuhe ergebenden Ölpolster ermöglichen trotz relativ schwerer aufliegender Last eine leichte Verschiebung derselben in Querrichtung. Die Verschiebung selbst erfolgt durch Verstellen jeweils einer der vier an einem Lagejustageschuh vorhandenen und seitlich an dessen Querverschiebeplatte 9 angreifenden Stellschrauben 20.
Nach Beendigung dieses Richtvorganges werden die einzelnen Drucölzufuhrleitungen innerhalb und außerhalb
jedes Lagejustageschuhes druckentlastet und anschließend die Förderleitungen 5 von den einzelnen Lagejustageschuhen abgekoppelt. Nach dieser Maßnahme ist
die Feinjustage der auf den Lagejustageschuhen ruhenden Last beendet.

Nach dem vorstehend geschilderten Justagevorgang verbleiben die Lagejustageschuhe als Widerlager unter
der Last. Es ist aufgrund der erfindungsgemäßen Konstruktion der Lagejustageschuhe jedoch jederzeit möglich, diese nach erfolgter Justage der Last durch
wesentlich billigere und einfachere Lagerelemente,
beispielsweise einfache Stahlplatten, zu ersetzen,
die unter Verwendung von Ausgleichsplatten auf die
jeweilige Stützhöhe des zu ersetzenden Lagejustageschuhes einstellbar und zum Ersatz derselben unter
die Last einschiebbar sind. Die anschließende Entlastung der Lagejustage erfolgt durch Verdrehen von
deren Verschiebespindel 26 in Richtung für eine Absenkung der Trägerplatte 11. Nach diesem Vorgang
sitzt die Last nur mehr auf den Ersatzlagerelementen auf, so daß die Lagejustageschuhe mühelos entfernt werden können.

Patentansprüche:

1. Hilfseinrichtung für die Aufstellung von Schwerlasten wie Großmaschinen, beispielsweise Druckwerke, Brennkraftmaschinen oder dergleichen an einer Stellfläche, gekennzeichnet durch einen Lagejustageschuh (1) mit einer an der Stellfläche zur Anlage kommenden Grundplatte (6) und einer an der aufzustellenden Last zur Anlage kommenden Auflagefläche (45) an einem Teil eines Hebe- und Verschiebemechanismus, der aus einer an der Oberseite (16) der Grundplatte (6) angeordneten Querverschiebeplatte (9) sowie einer dergegenüber unter Einwirkung einer zwischengeschalteten, querverschieblichen Keilplatte (10) höhenverstellbaren Trägerplatte (11) besteht und für eine Querverschiebung unter aufgesetzter Last zur Ausbildung eines Ölpolsters zwischen Grundplatte (6) und Querverschiebeplatte (9) über schuhinterne Drucköllzuleitungen an eine Druckölversorgung (2) anschließbar ist.

2. Hilfseinrichtung nach Anspruch 1, dadurch gekennzeichnet, daß die Trägerplatte (11), die Keilplatte (10), die Querverschiebeplatte (9) und die Grundplatte (6) jeweils kreisförmig ausgebildet sind, die Grundplatte (6) gegenüber den anderen durchmessergleichen Platten (9, 10, 11) jedoch durchmessergrößer und außen von einem axial vorspringenden Begrenzungsring (12) umgeben ist, der bis knapp an die Unterseite (13) der Keilplatte (10) heranreichend den Verschiebebereich der Querverschiebeplatte (9) begrenzt.

3. Hilfseinrichtung nach Anspruch 2, dadurch gekennzeichnet, daß der Begrenzungsring (12) gleichmäßig am Umfang verteilt vier radiale Gewindebohrungen (19) mit eingesetzten Stellschrauben (20) aufweist, die zur Querverschiebung des Hebe- und Verschiebemechanismus in vier Richtungen dienen und an der Querverschiebeplatte (9) seitlich angreifen.

4. Hilfseinrichtung nach einem oder mehreren der vorhergehenden Ansprüche, dadurch gekennzeichnet, daß an der Oberseite (14) der Querverschiebeplatte (9) in zentraler Lage eine axial vorspingende zylindrische Führungssäule (21) angeordnet ist, die eine quer zu ihr verlaufende Längsnut (22) in der Keilplatte (10) sowie eine durchmesserseitig geringfügig größere Führungsbohrung (23) in der Trägerplatte (11) durchdringt, wodurch deren fluchtende Lage zur Querverschiebeplatte (9) sichergestellt ist.

5. Hilfseinrichtung nach einem oder mehreren der vorhergehenden Ansprüche, dadurch gekennzeichnet, daß an der Querverschiebeplatte (9) symmetrisch zu deren Achse zwei einander diametral gegenüberliegende parallele Führungsflächen (36) vorgesehen sind, die mit zwei parallelen Führungsplatten (37, 38) zusammenwirken, die an der Trägerplatte (11) symmetrisch zu deren Achse, die dazwischenliegende schräge Hebefläche (18) derselben begrenzend und diametral einander gegenüberliegend angeordnet sind, welche Führungsplatten (37, 38) mit ihren Innenflächen außerdem mit zwei parallelen Führungsflächen (42) zusammenwirken, die an der Keilplatte (10) parallel zur Längsnut (22) derselben, die dazwischenliegende schräge Verschiebefläche (17) begrenzend angeordnet sind.

6. Hilfseinrichtung nach Anspruch 4, dadurch gekennzeichnet, daß die Führungssäule (21) im Bereich der Keilplatte (10) eine quer durchgehende Gewindebohrung (25) aufweist, in die eine in der Keilplatte (10) drehbar gelagerte, jedoch gegen axiale Verschiebung gesicherte Verschiebespindel (26) mit ihrem Stellgewindebolzen (27) eingreift, der den durch die Längsnut (22) gebildeten Freiraum in der Keilplatte (10) mittig durchdringt und an den sich als weitere Teile der Verschiebespindel ein, eine Führungsbohrung (28) in der Keilplatte (10) durchdringender Führungsschaft (29) sowie an diesen außerhalb der Keilplatte (10) ein durchmessergrößerer Verstellschaft (30) mit Anformungen (31) für das Ansetzen von Werkzeugen anschließen.

7. Hilfseinrichtung nach Anspruch 1, dadurch gekennzeichnet, daß die schuhinternen Drucköolzuleitungen in der Grundplatte (6) vorgesehen sind.

8. Hilfseinrichtung nach Anspruch 7, dadurch gekennzeichnet, daß als schuhinterne Drucköolzuleitungen in der Grundplatte (6) eine an deren Oberseite (16) gelegene Ringnut (47), zwei in diese einmündende achsparallele Stichbohrungen (48, 49) und ein zu diesen hinführender Querkanal (50) vorgesehen sind, welch letzterer seitlich aus der Grundplatte (6) herausgeführt und über ein an der Grundplatte (6) befestigtes Anschlußorgan (51) an die Druckölversorgung (2) anschließbar ist.

9. Hilfseinrichtung nach Anspruch 8, dadurch gekennzeichnet, daß die Druckölversorgung (2) aus einem Druckölreservoir (3), einer Hochdruckförderpumpe (4) sowie Förderleitungen (5) mit Anschluß-

PB 3045/1457 - 4 -

elementen für deren Ankopplung an die Anschlußorgane (51) der Lagejustageschuhe (1) besteht.

10. Hilfseinrichtung nach einem oder mehreren der vorhergehenden Ansprüche, dadurch gekennzeichnet,
daß an der Grundplatte (6) eine Lecköfangrinne
(52) sowie eine hiervon abzweigende Rücklaufbohrung (53) mit Innengewinde zum Anschluß einer mit
dem Drucköreservoir (3) verbundenen Lecköl rücklaufleitung (54) vorgesehen ist.          .

11. Hilfseinrichtung nach einem oder mehreren der vorhergehenden Ansprüche, dadurch gekennzeichnet, daß
an der Oberseite der Trägerplatte (11) eine konkave Lagerschale (44) mit aufgesetzter Kalotte (43)
vorgesehen ist, welch letztere zum Ausgleich von
Unebenheiten der Stellfläche oder der Anlagefläche
der Last dient und mit ihrer Stirnfläche (45) an
der aufzustellenden Last zur Anlage kommt.

12. Hilfseinrichtung nach einem oder mehreren der vorhergehenden Ansprüche, dadurch gekennzeichnet, daß
die aneinander angrenzenden Flächen (13, 14, 15,
16, 17, 18) an der Grundplatte (6), der Querverschiebeplatte (9), der Keilplatte (10) und der
Trägerplatte (11) jeweils geschliffen sind.

Fig.1

Fig.2

Fig.3

Fig.4

Fig.5

**Europäisches Patentamt**

**EUROPÄISCHER RECHERCHENBERICHT**

Nummer der Anmeldung

EP 81 10 1858

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 849 857 (MURRAY)<br>* Insgesamt *<br><br>-- | 1-3,7,9 |
| | US - A - 1 987 726 (WILKERSON, MAYNARD)<br>* Insgesamt *<br><br>-- | 1,4,6,11 |
| | GB - A - 2 011 350 (PFISTER GmbH)<br>* Abbildungen 1,3; Seite 3, Zeile 98 - Seite 4, Zeile 33; Seite 4, Zeilen 44-72 *<br>& DE - A - 2 758 340<br><br>-- | 1,7,10,11 |
| | US - A - 3 578 281 (NIELSEN, TURNER)<br>* Insgesamt *<br><br>-- | 1-3,7,8 |
| | US - A - 3 089 680 (DEVE)<br>* Abbildungen 1-3; Spalte 1, Zeile 46 - Spalte 2, Zeile 43 *<br><br>-- | 1-3,7,12 |
| | FR - A - 1 361 684 (BOSCHI)<br>* Abbildungen 1,4; Seite 1, rechte Spalte, Zeile 19 - Seite 2, linke Spalte, Zeile 2 *<br><br>-- | 1,4,6 |
| | DE - A - 1 904 766 (JANTZEN)<br>* Insgesamt *<br><br>-- ./. | 1,4,11 |

Der vorliegende Recherchenbericht wurde für alle Patentansprüche erstellt.

| Recherchenort | Abschlußdatum der Recherche | Prüfer |
|---|---|---|
| Den Haag | 20-05-1981 | JAIK |

**KLASSIFIKATION DER ANMELDUNG (Int. Cl.³)**

F 16 M 7/00

**RECHERCHIERTE SACHGEBIETE (Int. Cl.³)**

B 41 F
B 66 F
E 02 D
F 01 D
F 02 B
F 02 C
F 16 C
F 16 M

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

**Europäisches Patentamt**

## EUROPÄISCHER RECHERCHENBERICHT

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | GB - A - 355 387 (FEREDAY)<br> * Insgesamt *<br><br>-- | 1,5,7,<br>8 | |
| | GB - A - 2 010 414 (MARIE)<br> * Abbildung 2; Seite 1, Zeile 82 - Seite 2, Zeile 8 *<br>& DE - A - 2 851 521<br><br>-- | 7-10 | |
| | DE - A - 1 575 464 (MUHLHAUSER)<br> * Insgesamt *<br><br>---- | 7-10 | RECHERCHIERTE SACHGEBIETE (Int. Cl. 3) |